# EUROPEAN PATENT SPECIFICATION

(11) **EP 2 921 944 B1**
(45) Date of publication and mention of the grant of the patent: **09.01.2019**
(21) Application number: 14160370.4
(22) Date of filing: 17.03.2014
(51) Int. Cl.: G06F 3/0481

(54) **USER INTERFACE**
BENUTZERSCHNITTSTELLE
INTERFACE UTILISATEUR

(43) Date of publication of application: 23.09.2015
(73) Proprietor: Nokia Technologies Oy, 02610 Espoo (FI)
(72) Inventor: Vilermo, Miikka Tapani, 37200 Siuro (FI); Lehtiniemi, Arto Juhani, 33880 Lempäälä (FI); Eronen, Antti Johannes, 33820 Tampere (FI); Leppänen, Jussi Artturi, 33580 Tampere (FI)
(74) Representative: Swindell & Pearson Limited

(56) References cited:
- WO-A1-2009/051665
- US-A1- 2008 052 945
- US-A1- 2009 061 837

## Description

### TECHNOLOGICAL FIELD

Embodiments of the present invention relate to a user interface. Some embodiments relate to a gallery that enables a user to scroll through and view visual content items.

### BACKGROUND

An electronic device such as a mobile telephone or a tablet computer may store visual content items. A user may be able to browse through the visual content items using a scrolling technique. In some examples, as a user scrolls through the visual content items, each individual visual content item substantially fills the display. In other examples, a scrollable grid of visual content items is displayed.

US 2008/0052945 discloses a portable electronic device, comprising a touch screen that is configured to display images. When the portable device is displaying an image, upon detecting a user gesture, the portable electronic device replaces the image on the touch screen with the previous/next one in a virtual camera roll.

### BRIEF SUMMARY

According to various, but not necessarily all, embodiments of the invention there is provided a method, comprising: causing a visual content item to be statically displayed on a display; identifying a directional input from a user; responding to the directional input, if the statically displayed visual content item is a visual content item that includes motion, by scrolling the visual content item across the display and by initiating animation of at least one subject within the visual content item, such that the at least one subject is animated within the visual content item relative to the scrolling visual content item while the visual content item is scrolling across the display; and responding to the directional input, if the statically displayed visual content item is a visual content item that does not include motion, by scrolling the visual content item across the display without animating the visual content item relative to the scrolling visual content item while the visual content item is scrolling across the display. According to various, but not necessarily all, embodiments of the invention there is provided an apparatus, comprising: means for causing a visual content item to be statically displayed on a display; means for identifying a directional input from a user; means for responding to the directional input, if the statically displayed visual content item is a visual content item that includes motion, by scrolling the visual content item across the display and by initiating animation of at least one subject within the visual content item, such that the at least one subject is animated within the visual content item relative to the scrolling visual content item while the visual content item is scrolling across the display; and means for responding to the directional input, if the statically displayed visual content item is a visual content item that does not include motion, by scrolling the visual content item across the display without animating the visual content item relative to the scrolling visual content item while the visual content item is scrolling across the display.

According to various, but not necessarily all, embodiments of the invention there is provided computer program code that, when performed by at least one processor, causes the above method to be performed.

The present invention is defined by the appended claims. Particular embodiments are set out in the respective dependent claims. Embodiments which do not fall within the scope of the claims do not describe part of the present invention.

### BRIEF DESCRIPTION

For a better understanding of various examples that are useful for understanding the brief description, reference will now be made by way of example only to the accompanying drawings in which:
Fig. 1 illustrates a schematic of an apparatus in the form of a chipset;
Fig. 2 illustrates a schematic of an apparatus in the form of a hand portable electronic device;
Fig. 3 illustrates a flow chart of a method;
Fig. 4A illustrates a static visual content item being displayed on a display;
Fig. 4B illustrates a directional input being provided on the display;
Fig. 4C illustrates a subject in the visual content item being animated while the visual content item is being scrolled across the display;
Fig. 5A illustrates another static visual content item being displayed on a display;
Fig. 5B illustrates a directional input being provided on the display;
Fig. 5C illustrates multiple subjects in the visual content item displayed in figure 5A being animated as the visual content item is scrolled across the display; and
Fig. 5D illustrates, as an alternative to Fig. 5C, a first subject in the visual content item being animated and second subject in the visual content item remaining static while the visual content item is being scrolled across the display; and
Fig. 6 illustrates a display screen comprising multiple visual content items arranged in columns and rows.

### DETAILED DESCRIPTION

Embodiments of the invention relate to a gallery that enables a user to scroll through and view visual content items.

Without limiting the scope of the claims, a technical effect of embodiments of the invention is that a user is informed of the types of visual content items that are being displayed (for example, photographs, videos and cinemagraphs), as he browses through a gallery, in a manner that conserves display real estate and battery power. This is explained in further detail below.

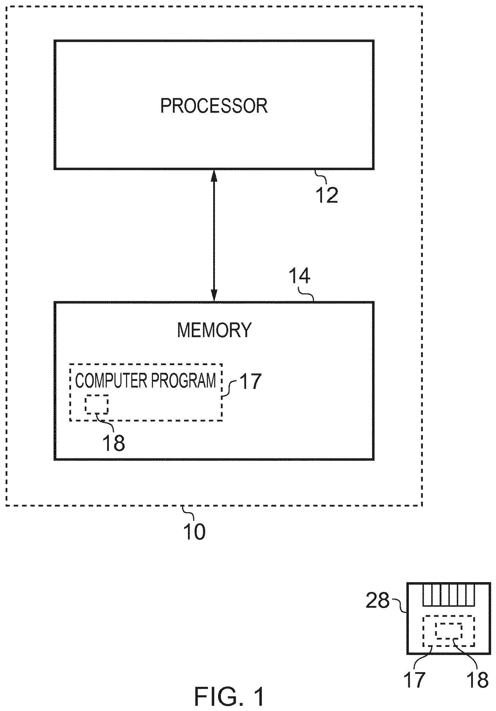

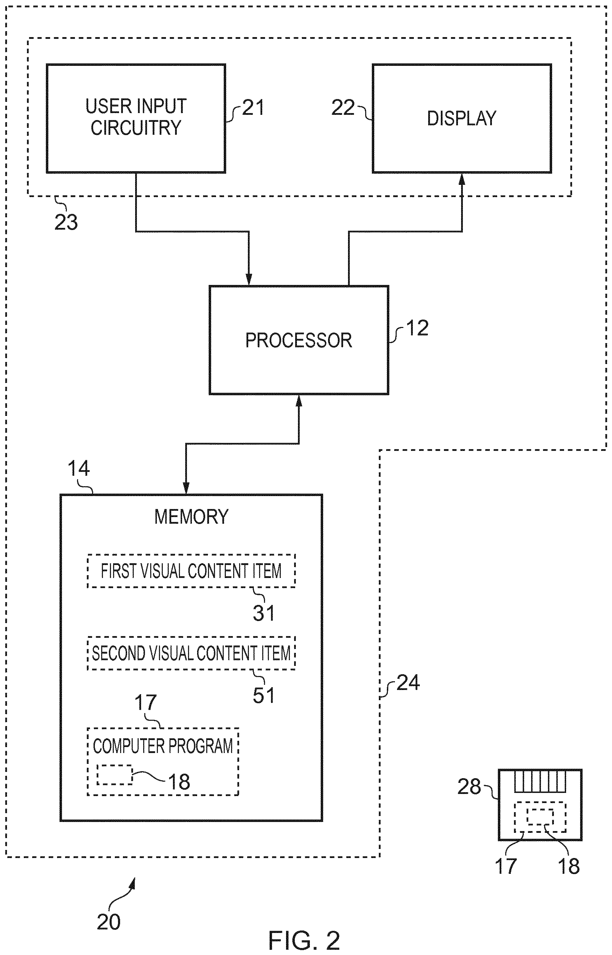

Figure 1 illustrates an apparatus 10 that may be a chip or a chipset. The apparatus 10 may form part of an electronic device such as that illustrated in figure 2.

The apparatus 10 comprises at least one processor 12 and at least one memory 14. A single processor 12 and a single memory 14 are shown in figure 1 for illustrative purposes.

The processor 12 is configured to read from and write to the memory 14. The processor 12 may comprise an output interface via which data and/or commands are output by the processor 12 and an input interface via which data and/or commands are input to the processor 12.

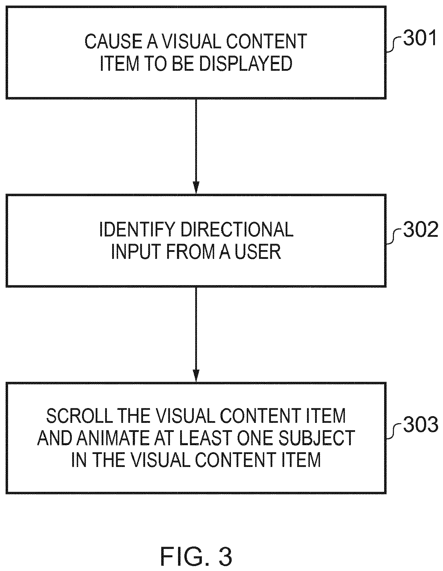

The memory 14 is illustrated as storing a computer program 17 which comprises computer program instructions/code 18 that control the operation of the apparatus 10 when loaded into the processor 12. The processor 12, by reading the memory, is able to load and execute the computer program code 18. The computer program code 18 provides the logic and routines that enables the apparatus 10 to perform the methods illustrated in figure 3 and described below. In this regard, the processor 12 and the computer program code 18 provide means for performing the methods illustrated in figure 3 and described below.

Although the memory 14 is illustrated as a single component in figure 1, it may be implemented as one or more separate components, some or all of which may be integrated/removable and/or may provide permanent/semi-permanent/dynamic/cached storage.

The computer program code 18 may arrive at the apparatus 10 via any suitable delivery mechanism 28. The delivery mechanism 28 may be, for example, a non-transitory computer-readable storage medium such as an optical disc or a memory card. The delivery mechanism 28 may be a signal configured to reliably transfer the computer program code 18. The apparatus 10 may cause the propagation or transmission of the computer program code 18 as a computer data signal.

Figure 2 illustrates an apparatus 20 in the form of an electronic device. The electronic device 20 may, for example, be a hand portable electronic device such as a mobile telephone, a tablet computer, a games console or a personal music player.

The example of the electronic device 20 illustrated in figure 2 includes user input circuitry 21, a display 22 and the apparatus 10 illustrated in figure 1 co-located in a housing 24. In other examples, the electronic device 20 might, for example, comprise other elements such as a camera and/or a radio frequency transceiver.

The elements 12, 14, 21 and 22 are operationally coupled and any number or combination of intervening elements can exist between them (including no intervening elements).

The display 22 is configured to display information under the control of the processor 12. The display 22 may be any type of display. It may, for example, be a liquid crystal display (LCD), an organic light emitting diode (OLED) display or a quantum dot display.

The user input circuitry 21 is configured to receive inputs from a user. In response to receiving an input from a user, the user input circuitry 21 provides a signal to the processor 12 that depends upon the input provided by the user. The user input circuitry 21 may, for example, include one or more keys. In some examples, at least part of the user input circuitry 21 is integrated with the display 22, in the form of a touch-sensitive display 23. The touch-sensitive display 23 may be any type of touch-sensitive display. It might function, for example, using capacitive, resistive, infrared, dispersive signal and/or acoustic pulse technology.

In figure 2, the memory 14 is illustrated as storing a first visual content item 31 and a second visual content item 51. The memory 14 may, however, store more visual content items than the two visual content items 31, 51 illustrated in figure 2.

Some or all of the visual content items 31, 51 may have been captured by a camera of the electronic device 20. Alternatively, some or all of the visual content items 31, 51 may have been captured by a different camera.

The visual content items 31, 51 may, for example, include: a video, a series of photographs captured using a burst mode of a camera, a cinemagraph, animations created virtually using a computer program or a combination thereof. Each of these types of visual content comprises a series of sequentially captured image frames which captures motion/animation of one or more subjects in the visual content items.

For example, a video may be formed of a series of image frames. The image frames may have been captured, for instance, at 24, 30, 50 or 60 image frames per second.

A series of burst mode photographs is a series of image frames that could have been captured at any rate. In some examples, the rate of capture is slower than the rate of capture for a video, and could be somewhere between 1 and 15 image frames per second.

A cinemagraph is a visual content item that is mostly formed from a single, static image frame. A cinemagraph also has one or more moving/animated regions in which movement occurs while the remainder of the cinemagraph remains static. The movement is displayed using a series of image frames. Typically the movement is minor in nature and repeated over time.

A first example of a method according to embodiments of the invention will now be described in conjunction with figures 3 to 4C, in the context of a cinemagraph. However, it will be apparent to those skilled in the art that the first example of the method is equally as applicable to other forms of visual content including videos and burst mode photographs.

In this first example, at least part of the user input circuitry 21 and the display 22 are integrated as a touch sensitive display 23.

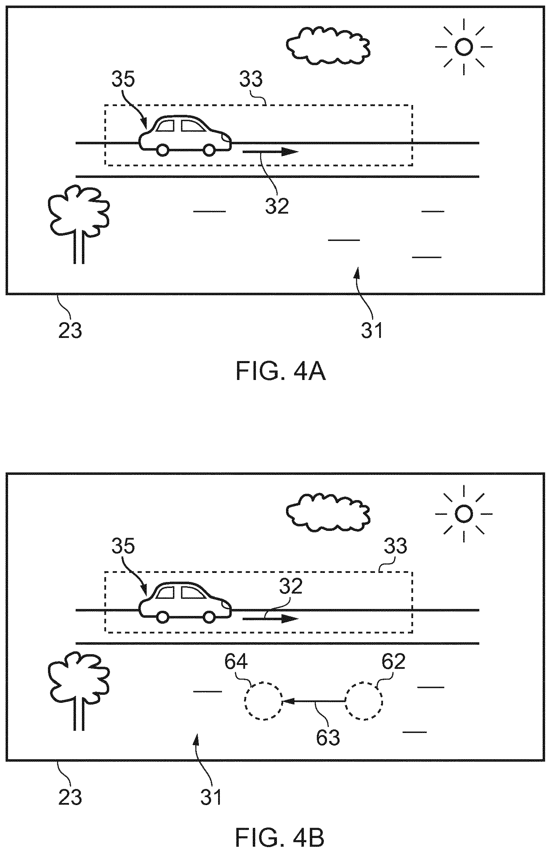

At block 301 in figure 3, the user provides inputs at the touch-sensitive display 23. The processor 12 responds to those inputs by opening a visual content gallery and by causing a visual content item 31, in the form of a cinemagraph, to be displayed on the touch sensitive display 23. This is illustrated in figure 4A. The visual content item 31 depicts a scene which includes one or more subjects.

The visual content gallery may include visual content items 31 that depict motion, such as video and cinemagraphs, and static visual content items such as photographs.

In this example, the visual content item 31 substantially fills the area of the display 23. In other examples, the visual content item 31 is smaller and does not substantially fill the display 23.

At this point in time, prior to directional input being provided by the user to scroll the visual content item 31, the visual content item 31 is static.

A dotted box in figure 4A indicates an area 33 in the visual content item 31 that comprises a subject 35 which can be animated. In the illustration, the subject 35 is a car moving along a road. The arrow labeled with the reference numeral 32 illustrates the direction of motion/animation of the subject 35. In practice, neither the dotted line illustrating the animated area 33 nor the arrow 32 would be visible to a user - they are merely indicated in figure 4A for the purpose of explaining this example.

At block 302 in figure 3, a user provides a directional input which is identified by the processor 12. That is, a user input is provided which is associated with a (scrolling) direction by the processor 12.

In this example, the directional input is a translation input that is provided at the touch-sensitive display 23. A translation input is a user input having a start, an end and a displacement input between the start and the end.

In other examples, the directional input could be provided in other ways. For instance, the directional input could be provided by a user simply actuating a key or a portion of a directional pad.

Figure 4B illustrates how a translation input is provided in this example. The dotted circle labeled with the reference numeral 62 illustrates a user placing a user input object, such as a digit, on the surface of the display 23. The user provides the translation input by moving the user input object in the direction indicated by the arrow labeled with the reference numeral 63 in figure 4B, without removing the user input object from the surface of the display 23. The dotted circle labeled with the reference numeral 64 indicates the final position of the user input object before the user lifts the user input object from the surface of the display 23.

In block 303 in figure 3, the processor 12 responds to the directional input provided by the user by scrolling the visual content item 31 across the display 23 and by animating at least one subject 35 in the visual content item 31, while the visual content item 31 is scrolling across the display 23. The direction in which the visual content item 31 is scrolled is the direction that is associated with the directional input that was provided in block 302.

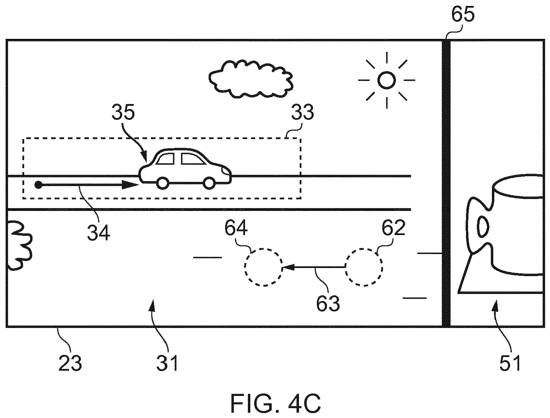

This is illustrated in figure 4C. As the user provides the translation input in this example, the processor 12 animates the subject 35 within the animated area 33. The arrow labeled with the reference numeral 34 in figure 4C indicates the direction of movement/animation of the subject 35 within the animated area 33 of the visual content item 31. It can be seen in figure 4C that the subject/car 35 has moved rightwards along the road, relative to its position in figures 4A and 4B.

In this example, when the user provides the translation input on the display 23, he drags the visual content item 31, using the user input object, in the direction in which the translation input is made. This causes part of the visual content item 31 to be removed from display. As a part of the visual content item 31 is removed from display, it is replaced with a part of a further visual content item 51. It can be seen in figure 4C that part of the visual content item 31 has effectively extended beyond the left hand side of the display 23 and been replaced on the right hand side of the display 23 with part of the further visual content item 51. A boundary 65 is illustrated in figure 4C which separates the visual content item 31 and further visual content item 51.

As the user scrolls through the visual content items in the gallery, static visual content items such as photographs are not animated as they are scrolled, but at least some types of visual content items that depict motion, such as cinemagraphs, video and series of burst mode photographs, may be animated as they are scrolled.

A technical effect provided by embodiments of the invention is that a user is informed of the type of visual content that is being represented on a display (for example, photographs, videos and cinemagraphs) by the animation that occurs in the visual content as the user browses through the visual content gallery, in a manner that conserves display real estate and battery power.

Display real estate is conserved because it is not necessary to allocate real estate to text or graphics which explicitly indicates that the visual content item 31 is a cinemagraph. Instead, a user can see that the visual content item 31 is a cinemagraph when the visual content item 31 is scrolled and a subject in the visual content item 31 is animated.

Battery power of the electronic device 20 is also potentially conserved because the animation in the visual content item 31 need only be displayed when the visual content item 31 is scrolled.

Different types of visual content items may be animated differently as they are scrolled, so that a user can recognize the type of visual content item that is displayed more easily. For example, animation in one type of visual content item (such as a video) may occur at a different speed from animation in a different type of visual content item (such as a cinemagraph).

In some embodiments, the processor 12 may cause a camera of the electronic device 20 to create a cinemagraph automatically when a video is captured. The cinemagraph may then be used to represent the video in the visual content gallery. In such embodiments, the animation present in visual content items being scrolled in the gallery does not necessarily differentiate between videos and cinemagraphs. The animation indicates, however, that motion/animation is present in a visual content item being scrolled.

In the first example provided above, the visual content item 31 was scrolled leftwards in response to the user providing a leftwards translation input. If the user had provided a directional input that was associated with a different (available) scrolling direction, the processor 12 would have responded by scrolling the visual content item 31 in a different direction. For instance, if the user had provided a rightwards translation input, the processor 12 would have responded by scrolling the visual content item 31 rightwards and by animating the subject 35 while the visual content item 31 was scrolling across the display 23.

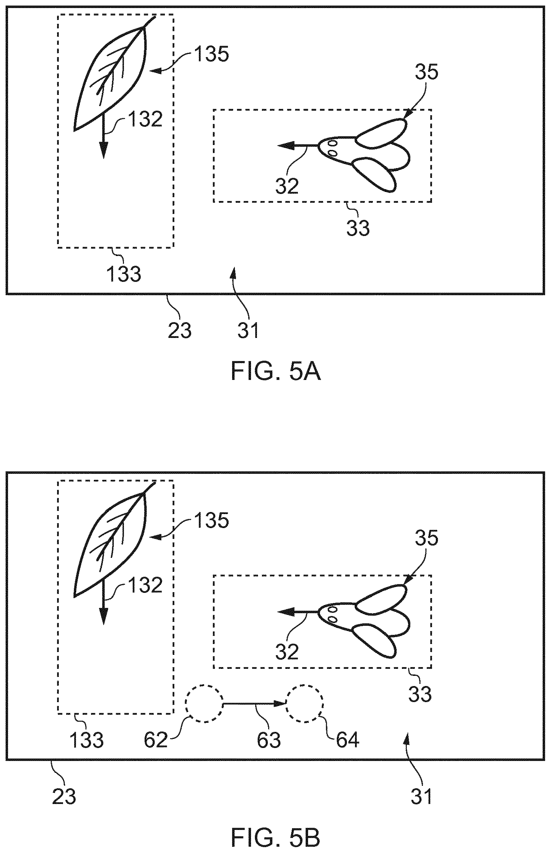

Figures 5A to 5C illustrate a second example of the method illustrated in figure 3. The second example is different from the first example in that there are first and second animated areas 33, 133 in the visual content item 31 in which a first subject 35 and a second subject 135 can be animated respectively.

In the second example, the first subject 35 is a fly and the second subject 135 is a leaf. The arrow labeled with the reference numeral 32 indicates the direction of movement of the first subject 35 in the first animated area 33. The arrow labeled with the reference numeral 132 indicates the direction of movement of the second subject 135 in the second animated area 133.

It can be seen in figure 5A that the direction of movement of the first subject 35 is different from the direction of movement of the second subject 135. In this particular example, the direction of the movement of the first subject 35 is horizontal and the direction of movement of the second subject 135 is vertical, substantially orthogonal to the direction of movement of the first subject 35.

The dotted lines designating the first and second animated areas 33 and 133 and the arrows 32, 132 indicating the direction of movement of the first and second subjects 35, 135 are present in figure 5A for the purposes of explanation, but they need not be displayed in practice.

The second example is similar to the first example in that the visual content item 31 is displayed in response to user input in block 301 of figure 3 and in that user provides a directional input in the form of a translation input to scroll the visual content item 31 across the display 23. Figure 5B illustrates the how the translation input is provided in this example.

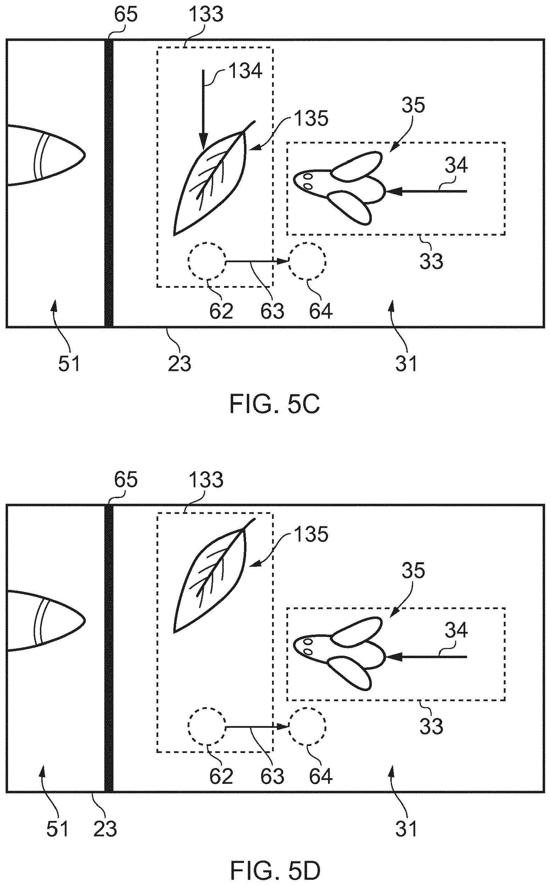

Figure 5C illustrates how the processor 12 may respond to the directional input provided by the user in the second example. In this example, the processor 12 responds by animating both the first subject 35 and the second subject 135. The arrow labeled with the reference numeral 34 illustrates the movement of the first subject 35 and the arrow labeled with the reference numeral 134 illustrates the movement of the second subject 135 while the directional input is being provided. The first subject 35 has moved to the left and the second subject 135 has moved downwards.

Figure 5D illustrates a third example which differs from the second example in that the second subject 135 does not move in response to the directional user input. Ordinarily, if the visual content item/cinemagraph 31 were played, both the first and second subjects 35, 135 would be animated. However, when directional user input is provided in block 302 of figure 3, in this example, the first subject 35 is animated without animating the second subject 135.

In this third example, the processor 12 is configured to analyze the visual content item 31 to determine a direction of animation of one or more of the subjects 35, 135 in the visual content item 31. The processor 12 determines that the direction of animation of the first subject 35 is in a first direction which is substantially aligned with a dimension in which the visual content items are scrollable in the visual content gallery (horizontally). The processor 12 also determines that the direction of animation of the second subject 135 is in a second direction which is not substantially aligned with a dimension in which the visual content items are scrollable in the visual content gallery. In the third example, when a directional user input is provided, the processor 12 responds by animating the first subject 35 in the first animated area 33, while the visual content item 31 is scrolling, without animating the second subject 135 in the second animated area 133.

The processor 12 may be configured to control a direction of animation of a subject in a visual content item 31 in dependence upon a direction of scrolling of the visual content item 31 and/or a direction of the directional input from the user. The processor 12 may, for example, control the direction of animation of the subject so that it is substantially opposite to the direction of the directional input and/or the direction of scrolling. This may make it easier for the user to see the animation than if, for example, the direction of animation were aligned with the direction of the directional input and the direction of scrolling.

For instance, in the context of the third example, if the user provides a rightwards translation input in block 302 of figure 3, as illustrated in figure 5D, the first subject 35 is animated leftwards in block 303 of figure 3. Alternatively, if the user provides a leftwards translation input, direction of animation of the first subject 35 is reversed and instead it is animated rightwards (starting from its final position).

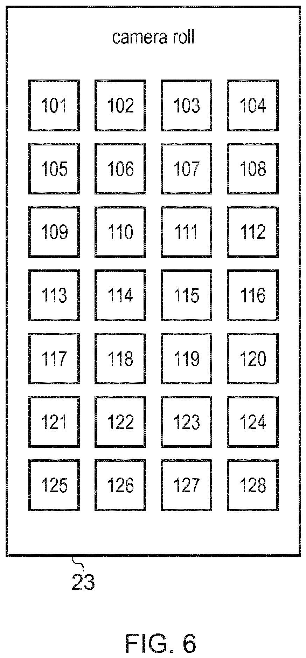

It is not necessary for each visual content item to substantially fill the display 23 in the visual content gallery. Figure 6 illustrates an alternative visual content gallery in which multiple visual content items 101-128 are displayed simultaneously. In the illustration, the visual content items 101-128 are displayed in columns and rows.

In the figure 6 example, one or more subjects in some or all of the visual content items 101-128 are animated, in response to a directional user input, while scrolling the visual content items 101-128 in accordance with the examples described above in relation to figures 3 to 5D.

References to 'non-transitory computer-readable storage medium', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.
This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in figure 3 may represent steps in a method and/or sections of code in the computer program 17. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For instance, in the above examples of the visual content item 31, each subject 35, 135 moves in a single direction. In other examples, an individual subject might move in multiple directions. A subject could, for example, have a first portion which is animated in a first direction and a second portion which is animated in a second direction. In such examples, the processor 12 may analyze the visual content item 31 to determine whether the first direction and/or the second direction is substantially aligned with a dimension in which visual content items are scrollable in the visual content gallery. If so, when a directional input is provided, the processor 12 may animate the subject in all directions. Alternatively, if, for instance, the processor 12 determines that the first direction is substantially aligned with a dimension in which visual content items are scrollable but the second direction is not, it might respond to directional input by scrolling the visual content item 31 and by animating the first portion of the subject without animating the second portion of the subject.

A translation input which is provided using a touch sensitive display is described above. In some alternative examples, the translation input could be provided, for instance, by provided by hovering input spaced from a display which is detected using one or more proximity sensors. Alternatively, a translation input could be provided using a computer mouse. In some examples, the animation might be different depending on whether the translation input is provided while touching the display or whether the translation input is provided using hovering. As an example, the animation movement may be slower if the translation input is provided using hovering compared to the case when the translation input is provided using touch. This can serve to create a feeling of the device and/or visual content items responding to the user input; for a touch input the movement will be more pronounced whereas for hovering input a more subtle animation is created.

In some examples, the directional input might be provided by a user tracing a circle, either when touching the display or hovering above the display. For instance, the clockwise tracing of a circle might correspond with a first scrolling direction and the anti-clockwise tracing of a circle might correspond with a second scrolling direction. The first scrolling direction might be rightwards and the second scrolling direction might be leftwards.

As explained above, the directional input that is provided by the user need not be a translation input. In some examples, the electronic device 20 may comprise one or more orientation sensors for detecting the orientation of the electronic device 20. A directional input may be provided by the user by tilting the electronic device 20 in these examples.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. An apparatus (10; 20), comprising:
means (12; 14; 17) for causing a visual content item (31; 51; 101-128) to be statically displayed on a display (22);
means (12; 14; 17) for identifying a directional input from a user;
means (12; 14; 17) for responding to the directional input, if the statically displayed visual content item is a visual content item that includes motion, by scrolling the visual content item across the display and by initiating animation of at least one subject (35; 135) within the visual content item, such that the at least one subject is animated within the visual content item relative to the scrolling visual content item while the visual content item is scrolling across the display; and
means (12; 14; 17) for responding to the directional input, if the statically displayed visual content item is a visual content item that does not include motion, by scrolling the visual content item across the display without animating the visual content item relative to the scrolling visual content item while the visual content item is scrolling across the display.

2. The apparatus of claim 1, wherein the visual content item is scrolled across the display as the directional input is being provided.

3. The apparatus of claim 1 or 2, wherein the directional input is a translation input.

4. The apparatus of claim 3, wherein the display is a touch sensitive display (23), and the translation input is provided at the touch sensitive display.

5. The apparatus of any of the preceding claims, wherein as the visual content item is scrolled across the display, a part of the visual content item (31) is replaced on the display with a part of a further visual content item (51).

6. The apparatus of any of the preceding claims, further comprising: means (12; 14; 17) for controlling a direction of animation of the at least one animated subject in dependence upon a direction in which the visual content item is scrolled.

7. The apparatus of claim 6, wherein the direction of scrolling is substantially opposite to the direction of animation of the at least one animatedsubject.

8. The apparatus of any of the preceding claims, wherein if the visual content item is a visual content item that includes motion, a first subject (35) and a second subject (135) are present in the visual content item, the first subject having a first direction of animation in the visual content item and the second subject having a second direction of animation in the visual content item, and wherein in response to the directional input, the first subject is animated in the visual content item, while the visual content item is scrolling across the display, without animating the second subject in the visual content item.

9. The apparatus of any of the preceding claims, wherein prior to the identification of the directional input, the visual content item (31) substantially fills the display.

10. The apparatus of any of the preceding claims, wherein the apparatus is a hand portable electronic device (20) which further comprises the display.

11. A method, comprising:
causing a visual content item (31; 51; 101-128) to be statically displayed on a display (22);
identifying a directional input from a user;
responding to the directional input, if the statically displayed visual content item is a visual content item that includes motion, by scrolling the visual content item across the display and by initiating animation of at least one subject (35; 135) within the visual content item, such that the at least one subject is animated within the visual content item relative to the scrolling visual content item while the visual content item is scrolling across the display; and
responding to the directional input, if the statically displayed visual content item is a visual content item that does not include motion, by scrolling the visual content item across the display without animating the visual content item relative to the scrolling visual content item while the visual content item is scrolling across the display.

12. The method of claim 11, wherein the visual content item is scrolled across the display as the directional input is being provided.

13. The method of claim 11 or 12, wherein the directional input is a translation input.

14. The method of claim 13, wherein the display is a touch sensitive display (23), and the translation input is provided at the touch sensitive display.

15. Computer program code (18) that, when performed by at least one processor, causes the method as claimed in any of claims 11 to 14 to be performed.

## Patentansprüche

1. Vorrichtung (10; 20), umfassend:
Mittel (12; 14; 17) zum Bewirken, dass ein visuelles Inhaltselement (31; 51; 101-128) auf einer Anzeige (22) statisch angezeigt wird;
Mittel (12; 14; 17) zum Identifizieren einer Richtungseingabe von einem Benutzer;
Mittel (12; 14; 17) zum Reagieren auf die Richtungseingabe, wenn das statisch angezeigte visuelle Inhaltselement ein visuelles Inhaltselement ist, das Bewegung enthält, durch Verlagern des visuellen Inhaltselements über die Anzeige und durch Einleiten von Animation mindestens eines Motivs (35; 135) in dem visuellen Inhaltselement derart, dass das mindestens eine Motiv in dem visuellen Inhaltselement relativ zu dem sich verlagernden visuellen Inhaltselement animiert wird, während das visuelle Inhaltselement über die Anzeige verlagert wird; und
Mittel (12; 14; 17) zum Reagieren auf die Richtungseingabe, wenn das statisch angezeigte visuelle Inhaltselement ein visuelles Inhaltselement ist, das keine Bewegung enthält, durch Verlagern des visuellen Inhaltselements über die Anzeige, ohne das visuelle Inhaltselement relativ zu dem sich verlagernden visuellen Inhaltselement zu animieren, während das visuelle Inhaltselement über die Anzeige verlagert wird.

2. Vorrichtung nach Anspruch 1, wobei das visuelle Inhaltselement über die Anzeige verlagert wird, während die Richtungseingabe bereitgestellt wird.

3. Vorrichtung nach Anspruch 1 oder 2, wobei die Richtungseingabe eine Translationseingabe ist.

4. Vorrichtung nach Anspruch 3, wobei die Anzeige eine berührungsempfindliche Anzeige (23) ist und die Translationseingabe an der berührungsempfindlichen Anzeige bereitgestellt wird.

5. Vorrichtung nach einem der vorstehenden Ansprüche, wobei, während das visuelle Inhaltselement über die Anzeige verlagert wird, ein Teil des visuellen Inhaltselements (31) auf der Anzeige durch einen Teil eines weiteren visuellen Inhaltselements (51) ersetzt wird.

6. Vorrichtung nach einem der vorstehenden Ansprüche, ferner umfassend: Mittel (12; 14; 17) zum Steuern einer Animationsrichtung des mindestens einen animierten Motivs in Abhängigkeit von einer Richtung, in die das visuelle Inhaltselement verlagert wird.

7. Vorrichtung nach Anspruch 6, wobei die Verlagerungsrichtung der Animationsrichtung des mindestens einen animierten Motivs im Wesentlichen entgegengesetzt ist.

8. Vorrichtung nach einem der vorstehenden Ansprüche, wobei, wenn das visuelle Inhaltselement ein visuelles Inhaltselement ist, das Bewegung enthält, ein erstes Motiv (35) und ein zweites Motiv (135) in dem visuellen Inhaltselement vorhanden sind, wobei das erste Motiv eine erste Animationsrichtung in dem visuellen Inhaltselement aufweist und das zweite Motiv eine zweite Animationsrichtung in dem visuellen Inhaltselement aufweist, und wobei, als Reaktion auf die Richtungseingabe, das erste Motiv in dem visuellen Inhaltselement animiert wird, während das visuelle Inhaltselement über die Anzeige verlagert wird, ohne das zweite Motiv in dem visuellen Inhaltselement zu animieren.

9. Vorrichtung nach einem der vorstehenden Ansprüche, wobei das visuelle Inhaltselement (31) vor der Identifikation der Richtungseingabe die Anzeige im Wesentlichen ausfüllt.

10. Vorrichtung nach einem der vorstehenden Ansprüche, wobei die Vorrichtung eine in der Hand tragbare elektronische Vorrichtung (20) ist, die ferner die Anzeige umfasst.

11. Verfahren, umfassend:
Bewirken, das ein visuelles Inhaltselement (31; 51; 101-128) auf einer Anzeige (22) statisch angezeigt wird;
Identifizieren einer Richtungseingabe von einem Benutzer;
Reagieren auf die Richtungseingabe, wenn das statisch angezeigte visuelle Inhaltselement ein visuelles Inhaltselement ist, das Bewegung enthält, durch Verlagern des visuellen Inhaltselements über die Anzeige und durch Einleiten von Animation mindestens eines Motivs (35; 135) in dem visuellen Inhaltselement derart, dass das mindestens eine Motiv in dem visuellen Inhaltselement relativ zu dem sich verlagernden visuellen Inhaltselement animiert wird, während das visuelle Inhaltselement über die Anzeige verlagert wird; und
Reagieren auf die Richtungseingabe, wenn das statisch angezeigte visuelle Inhaltselement ein visuelles Inhaltselement ist, das keine Bewegung enthält, durch Verlagern des visuellen Inhaltselements über die Anzeige, ohne das visuelle Inhaltselement relativ zu dem sich verlagernden visuellen Inhaltselement zu animieren, während das visuelle Inhaltselement über die Anzeige verlagert wird.

12. Verfahren nach Anspruch 11, wobei das visuelle Inhaltselement über die Anzeige verlagert wird, während die Richtungseingabe bereitgestellt wird.

13. Verfahren nach Anspruch 11 oder 12, wobei die Richtungseingabe eine Translationseingabe ist.

14. Verfahren nach Anspruch 13, wobei die Anzeige eine berührungsempfindliche Anzeige (23) ist und die Translationseingabe an der berührungsempfindlichen Anzeige bereitgestellt wird.

15. Computerprogrammcode (18), der, wenn er durch mindestens einen Prozessor ausgeführt wird, bewirkt, dass das Verfahren nach einem der Ansprüche 11 bis 14 durchgeführt wird.

## Revendications

1. Appareil (10 ; 20), comprenant :
des moyens (12 ; 14 ; 17) pour amener un élément de contenu visuel (31 ; 51 ; 101-128) à s'afficher de manière statique sur un affichage (22) ;
des moyens (12 ; 14 ; 17) pour identifier une entrée directionnelle d'un utilisateur ;
des moyens (12 ; 14 ; 17) pour répondre à l'entrée directionnelle, si l'élément de contenu visuel affiché de manière statique est un élément de contenu visuel qui comprend un mouvement, en faisant défiler l'élément de contenu visuel sur l'affichage et en initiant une animation d'au moins un sujet (35 ; 135) dans l'élément de contenu visuel, de manière à ce que l'au moins un sujet soit animé dans l'élément de contenu visuel par rapport à l'élément de contenu visuel défilant tandis que l'élément de contenu visuel défile sur l'affichage ; et
des moyens (12 ; 14 ; 17) pour répondre à l'entrée directionnelle, si l'élément de contenu visuel affiché de manière statique est un élément de contenu visuel qui ne comprend pas de mouvement, en faisant défiler l'élément de contenu visuel sur l'affichage sans animer l'élément de contenu visuel par rapport à l'élément de contenu visuel défilant tandis que l'élément de contenu visuel défile sur l'affichage.

2. Appareil selon la revendication 1, dans lequel l'élément de contenu visuel est déplacé sur l'affichage lorsque l'entrée directionnelle est fournie.

3. Appareil selon la revendication 1 ou la revendication 2, dans lequel l'entrée directionnelle est une entrée de translation.

4. Appareil selon la revendication 3, dans lequel l'affichage est un affichage tactile (23), et l'entrée de translation est fournie au niveau de l'affichage tactile.

5. Appareil selon l'une quelconque des revendications précédentes, dans lequel tandis que l'élément de contenu visuel est déplacé sur l'affichage, une partie de l'élément de contenu visuel (31) est remplacée sur l'affichage par une partie d'un autre élément de contenu visuel (51).

6. Appareil de l'une quelconque des revendications précédentes, comprenant en outre : des moyens (12 ; 14 ; 17) pour commander une direction d'animation de l'au moins un sujet animé en fonction d'une direction suivant laquelle l'élément de contenu visuel est déplacé.

7. Appareil selon la revendication 6, dans lequel la direction de défilement est sensiblement opposée à la direction d'animation de l'au moins un sujet animé.

8. Appareil selon l'une quelconque des revendications précédentes, dans lequel, si l'élément de contenu visuel est un élément de contenu visuel qui comprend un mouvement, un premier sujet (35) et un second sujet (135) sont présents dans l'élément de contenu visuel, le premier sujet ayant une première direction d'animation dans l'élément de contenu visuel et le second sujet ayant une seconde direction d'animation dans l'élément de contenu visuel, et où, en réponse à une entrée directionnelle, le premier sujet est animé dans l'élément de contenu visuel tandis que l'élément de contenu visuel défile sur l'affichage sans animer le second sujet dans l'élément de contenu visuel.

9. Appareil selon l'une quelconque des revendications précédentes, dans lequel, avant l'identification de l'entrée directionnelle, l'élément de contenu visuel (31) remplit sensiblement l'affichage.

10. Appareil selon l'une quelconque des revendications précédentes, dans lequel l'appareil est un dispositif électronique portable (20) qui comprend en outre l'affichage.

11. Procédé, comprenant les étapes suivantes :
amener qu'un élément de contenu visuel (31 ; 51 ; 101-128) soit affiché de manière statique sur un affichage (22) ;
identifier une entrée directionnelle d'un utilisateur ;
répondre à l'entrée directionnelle, si l'élément de contenu visuel affiché de manière statique est un élément de contenu visuel qui comprend un mouvement, en faisant défiler l'élément de contenu visuel sur l'affichage et en initiant une animation d'au moins un sujet (35 ; 135) dans l'élément de contenu visuel, de manière à ce que l'au moins un sujet soit animé dans l'élément de contenu visuel par rapport à l'élément de contenu visuel défilant tandis que l'élément de contenu visuel défile sur l'affichage ; et
répondre à l'entrée directionnelle, si l'élément de contenu visuel affiché de manière statique est un élément de contenu visuel qui ne comprend pas de mouvement, en faisant défiler l'élément de contenu visuel sur l'affichage sans animer l'élément de contenu visuel par rapport à l'élément de contenu visuel défilant tandis que l'élément de contenu visuel défile sur l'affichage.

12. Procédé selon la revendication 11, dans lequel l'élément de contenu visuel est déplacé sur l'affichage lorsque l'entrée directionnelle est fournie.

13. Procédé selon la revendication 11 ou la revendication 12, dans lequel l'entrée directionnelle est une entrée de translation.

14. Procédé selon la revendication 13, dans lequel l'affichage est un affichage tactile (23), et l'entrée de translation est fournie au niveau de l'affichage tactile.

15. Code de programme informatique (18) qui, lorsqu'il est exécuté par au moins un processeur, entraîne l'exécution du procédé tel que revendiqué dans l'une quelconque des revendications 11 à 14.
